(19) **Europäisches Patentamt** / **European Patent Office** / **Office européen des brevets**

(11) **EP 4 496 255 A1**

(12) **EUROPEAN PATENT APPLICATION**
published in accordance with Art. 153(4) EPC

(43) Date of publication:
**22.01.2025 Bulletin 2025/04**

(21) Application number: **23795092.8**

(22) Date of filing: **17.04.2023**

(51) International Patent Classification (IPC):
**H04L 5/00** (2006.01)

(52) Cooperative Patent Classification (CPC):
**H04B 7/0456; H04B 7/06; H04L 5/00; H04L 27/26**

(86) International application number:
**PCT/CN2023/088739**

(87) International publication number:
**WO 2023/207659 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.04.2022 CN 202210441609**

(71) Applicant: **ZTE Corporation
Shenzhen, Guangdong 518057 (CN)**

(72) Inventors:
• **GUO, Xiaojiang
Shenzhen, Guangdong 518057 (CN)**
• **LI, Jie
Shenzhen, Guangdong 518057 (CN)**

(74) Representative: **Chimini, Francesco et al
Jacobacci & Partners S.p.A.
Piazza della Vittoria 11
25122 Brescia (IT)**

(54) **DOA DETERMINING METHOD AND DEVICE, STORAGE MEDIUM AND ELECTRONIC DEVICE**

(57) Embodiments of the present disclosure provide a method and apparatus for determining a direction of arrival, DOA, a storage medium, and an electronic apparatus. The method includes: determining a target reference signal and a codebook value corresponding to the target reference signal, and configuring the codebook value to a reconfigurable intelligent surface, RIS; acquiring a measurement result obtained after a receiving end measures the target reference signal which is reflected by the RIS to the receiving end, wherein the RIS correspondingly reflects the reference signal based on the codebook value; and determining a target DOA based on the measurement result.

```
┌─────────────────────────────────────────────────┐
│ Determine a target reference signal and a        │
│ codebook value corresponding to the target       │── S202
│ reference signal, and configure the codebook     │
│ value to a reconfigurable intelligent surface    │
│ (RIS)                                            │
└─────────────────────────────────────────────────┘
                        │
                        ▼
┌─────────────────────────────────────────────────┐
│ Acquire a measurement result obtained after a    │
│ receiving end measures the target reference      │── S204
│ signal which is reflected by the RIS to the      │
│ receiving end, wherein the RIS correspondingly   │
│ reflects the reference signal based on the       │
│ codebook value                                   │
└─────────────────────────────────────────────────┘
                        │
                        ▼
┌─────────────────────────────────────────────────┐
│ Determine a target DOA based on the measurement  │── S206
│ result                                           │
└─────────────────────────────────────────────────┘
```

Fig. 2

EP 4 496 255 A1

**Description**

The present disclosure claims the priority of Chinese patent application No. 202210441609.7, filed on April 25, 2022 and entitled "METHOD AND APPARATUS FOR DETERMINING DOA, STORAGE MEDIUM, AND ELECTRONIC APPARATUS", the content of which is incorporated herein by reference in its entirety.

**Technical Field**

Embodiments of the present disclosure relate to the field of communications, and in particular, to a method and apparatus for determining a DOA, a storage medium, and an electronic apparatus.

**Background**

A reconfigurable intelligent surface can effectively expand a coverage range of wireless communication signals, and especially has a very broad application prospect in a millimeter-wave band. The reconfigurable intelligent surface has become a very important evolution direction for Beyond 5G, B5G, and 6G. In a practical communication system, in order to improve the power gain of the reconfigurable intelligent surface, it is usually necessary to enlarge an area of the reconfigurable intelligent surface and use a narrow beam to achieve coverage of a user terminal. In the millimeter-wave band, a reconfigurable intelligent surface with an extremely small area can generate an extremely narrow beam. A narrower beam leads to a greater gain of the reconfigurable intelligent surface, and the reconfigurable intelligent surface needs to scan a larger number of beams for the user terminal, resulting in higher beam scanning resource cost. The beams become wider, so that the power gain brought by the reconfigurable intelligent surface will be greatly reduced.

At present, there is little research on beam scanning and tracking of the reconfigurable intelligent surface, and there are more researches on beam scanning of a millimeter-wave base station. A commonly used low-cost beam scanning method for a millimeter-wave base station can be roughly summarized as follows: A wide beam is first used for scanning to determine an approximate range of a user terminal, and then a narrow beam is used for scanning within a coverage range of the wide beam, so as to determine a more accurate position. The precision of this scanning method is ultimately limited by a beam width and scanning interval of the narrow beam used. Obviously, in order to reduce the resource cost, the scanning interval cannot be infinitely reduced. For the reconfigurable intelligent surface, the beam scanning method for the millimeter-wave base station can be referred. Relatively speaking, the reconfigurable intelligent surface has a larger area in a reflection plate, the narrow beam is narrower, and more beams need to be scanned, so that it is more difficult to achieve high-precision beam scanning and tracking.

There is currently no effective solution proposed to address the issues of low beam scanning precision and high tracking difficulty in the related technology.

**Summary**

Embodiments of the present disclosure provide a method and apparatus for determining a direction of arrival, DOA, a storage medium, and an electronic apparatus, so as to at least solve the problems of low beam scanning precision and high tracking difficulty in the related technology.

According to an embodiment of the present disclosure, a method for determining a DOA is provided, including: determining a target reference signal and a codebook value corresponding to the target reference signal, and configuring the codebook value to a reconfigurable intelligent surface, RIS; acquiring a measurement result obtained after a receiving end measures the target reference signal which is reflected by the RIS to the receiving end, wherein the RIS correspondingly reflects the reference signal based on the codebook value; and determining a target DOA based on the measurement result.

According to another embodiment of the present disclosure, an apparatus for determining a DOA is provided, including: a determining module, configured to: determine a target reference signal and a codebook value corresponding to the target reference signal, and configure the codebook value to a reconfigurable intelligent surface, RIS; an acquisition module, configured to acquire a measurement result obtained after a receiving end measures the target reference signal which is reflected by the RIS to the receiving end, wherein the RIS correspondingly reflects the reference signal based on the codebook value; and a determining module, configured to determine a target DOA based on the measurement result.

According to still another embodiment of the present disclosure, a computer readable storage medium is further provided. The computer readable storage medium stores a computer program. The computer program is configured to perform the steps in any one of the method embodiments when run.

According to yet still another embodiment of the present disclosure, an electronic apparatus is further provided, including a memory and/or a processor. The memory stores a computer program (or referred to as software). The processor is configured to execute the computer program to perform the steps in any one of the method embodiments.

## Brief Description of the Drawings

FIG. 1 is a block diagram of a hardware structure of a mobile terminal in a method for determining a DOA according to an embodiment of the present disclosure;

FIG. 2 is a flowchart of a method for determining a DOA according to an embodiment of the present disclosure;

FIG. 3 is a schematic diagram showing that an RIS achieves rough coverage on user equipment, UE, through several beams in a beam space according to an embodiment of the present disclosure;

FIG. 4 is a schematic diagram showing that an RIS uses a narrow beam with higher power to achieve coverage on UE through an estimated DOA according to an embodiment of the present disclosure;

FIG. 5 is a schematic diagram of estimating a DOA in a one-dimensional azimuth direction according to an embodiment of the present disclosure;

FIG. 6 is a schematic diagram of estimating a DOA in a one-dimensional pitching direction according to an embodiment of the present disclosure;

FIG. 7 is a schematic diagram of performing two-dimensional DOA estimation using three beams according to an embodiment of the present disclosure;

FIG. 8 is a schematic diagram of performing two-dimensional DOA estimation using four beams according to an embodiment of the present disclosure;

FIG. 9 is a schematic diagram of performing two-dimensional DOA estimation using five beams according to an embodiment of the present disclosure;

FIG. 10 is a flowchart showing that an RIS estimates a DOA of a terminal when the terminal transmits a reference signal according to an embodiment of the present disclosure;

FIG. 11 is a flowchart showing that an RIS estimates a DOA of a terminal when a base station transmits a reference signal according to an embodiment of the present disclosure; and

FIG. 12 is a block structural diagram of an apparatus for determining a DOA according to an embodiment of the present disclosure.

## Detailed Description of the Embodiments

The embodiments of the present disclosure will be described in detail below with reference to the accompanying drawings and the embodiments.

It should be noted that the terms "first", "second", etc. in the specification and claims of the present disclosure and the above accompanying drawings are defined to distinguish similar objects, and do not have to be used to describe a specific order or sequence.

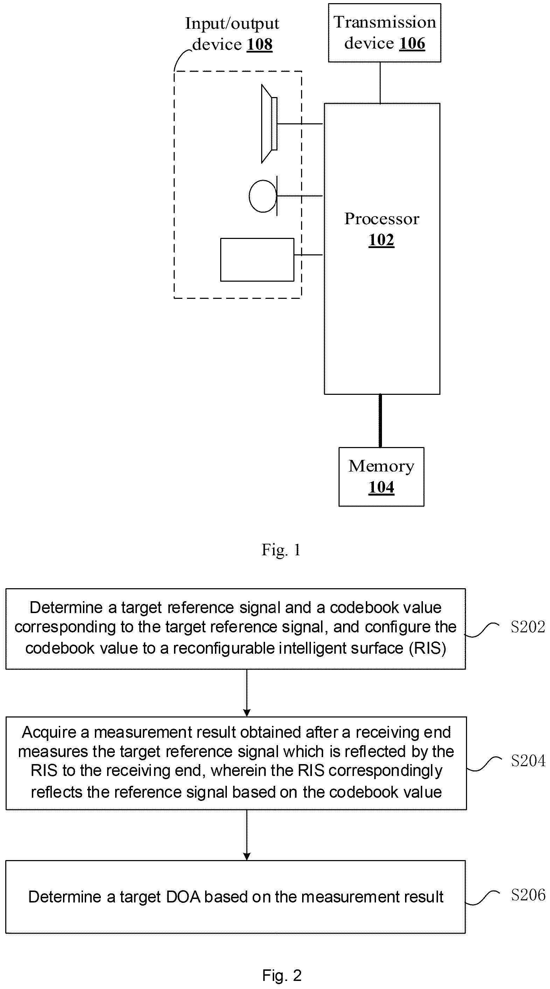

Method embodiments according to the embodiments of the present disclosure can be executed on a mobile terminal, a computer terminal, or a similar computing device. Being run on the mobile terminal is taken as an example. FIG. 1 is a block diagram of a hardware structure of a mobile terminal in a method for determining a DOA according to an embodiment of the present disclosure. As shown in FIG. 1, the mobile terminal may include one or more (only one is shown in FIG. 1) processors 102 (which may include but are not limited to a micro processing unit, MCU, a field programmable gate array, FPGA, and other processing apparatuses) and memories 104 configured to store data. The mobile terminal may also include a transmission device 106 for a communication function and an input/output device 108. A person of ordinary skill in the art can understood that the structures shown in FIG. 1 are only illustrative, and a limitation will not be made on the structures of the mobile terminal. For example, the mobile terminal can also include more or fewer components than those shown in FIG. 1, or have configurations different from those shown in FIG. 1.

The memory 104 can be configured to store a computer program, such as software programs and modules of application software, such as computer programs corresponding to the method of determining the DOA in the embodiments of the present disclosure. The processor 102 executes various functional applications and data processing by executing computer programs stored in the memory 104, that is, to implement the above method. The memory 104 may include high-speed random access memory and may also include a non-volatile memory, such as one or more magnetic storage apparatuses, a flash memory, or other non-volatile solid-state memories. In some instances, the memory 104 can further include a memory remotely located with respect to the processor 102. These remote memories can be connected to the mobile terminal through a network. Examples of the above network include, but are not limited to, Internets, intranets, local area networks, mobile communication networks, and combinations thereof.

The transmission device 106 is configured to receive or send data through a network. The specific examples of the above network may include a wireless network provided by a communication provider of the mobile terminal. In one example, the transmission device 106 includes a Network Interface Controller, NIC, that can be connected to other network devices through a base station for communication with the Internet. In one example, the transmission device 106 can be a Radio Frequency, RF, module configured to communicate with the Internet in a radio manner.

This embodiment provides a method for determining a DOA. FIG. 2 is a flowchart of a method for determining a DOA according to an embodiment of the present disclosure. As shown in FIG. 2, the flow includes the following steps:

Step S202, a target reference signal and a codebook value corresponding to the target reference signal are determined, and the codebook value is configured to a reconfigurable intelligent surface, RIS;

Step S204, a measurement result obtained after a receiving end measures the target reference signal which is reflected by the RIS to the receiving end is acquired, wherein the RIS correspondingly reflects the reference signal based on the codebook value; and

Step S206, a target DOA is determined based on the measurement result.

The above operations can be performed by a base station, a processing device arranged in the base station, another network element with a similar processing capability, or the like. The receiving end in step S204 can be either a base station or a terminal. When the above target reference signal is a downlink signal, the receiving end is the terminal, that is, the target reference signal needs to be sent by the base station to the terminal through the RIS; When the above target reference signal is an uplink signal, the receiving end is the base station, that is, the target reference signal needs to be sent by the terminal to the base station through the RIS. The two situations will be specifically explained below respectively.

In the above embodiments, since the target reference signal is reflected to the receiving end by the RIS based on the codebook value pre-configured by the base station, information interaction between the base station and the RIS is achieved. The codebook value used for reflecting the reference signal is adjusted based on an interaction result, thereby quickly achieving beam scanning and beam tracking of the RIS, and effectively solving the problems of low beam scanning precision and high tracking difficulty in the related technology. This further improves the beam scanning precision and lowers the tracking difficulty.

In an exemplary embodiment, a codebook value corresponding to the target reference signal is determined, which includes: Target beams between the RIS and a terminal are determined; and the codebook value is determined based on positions of the target beams.

In an exemplary embodiment, target beams between the RIS and a terminal are determined, which includes: A strongest beam, where the energy on the RIS side exceeds a predetermined threshold, between the RIS and the terminal is determined; and the strongest beam and a beam that satisfies a target relationship with the strongest beam are determined as the target beams, wherein the beam that satisfies the target relationship with the strongest beam includes at least one of the following: a next strongest beam adjacent to the strongest beam in an azimuth direction, and a next strongest beam adjacent to the strongest beam in a pitching direction. In this embodiment, the strongest beam is usually a wide beam or a narrow beam. The codebook value mentioned above can be determined based on the strongest beam. Of course, if necessary, the codebook value mentioned above also be determined comprehensively based on the strongest beam and the strong beam in an azimuth or pitching direction of the strongest beam. The strong beam in the azimuth or pitching direction of the strongest beam can be acquired by a method such as a synchronous reference signal, beam scanning, or prior information during the determination of the strong beam.

In an exemplary embodiment, a target reference signal is determined, which includes: A preset quantity of the target reference signals is configured within one slot, wherein each target reference signal occupies an orthogonal frequency division multiplexing, OFDM, symbol. After the target reference signal is determined, the method further includes: The terminal and the RIS are informed of parameter information of the target reference signal, wherein the parameter information includes at least one of the following: slot information, an OFDM symbol, a frequency domain position, and a mother code parameter. In this embodiment, the base station configures n (corresponding to the predetermined quantity mentioned above) reference signals at one time in one slot, and each reference signal occupies an OFDM symbol. The base station and the terminal need to know corresponding parameters of the reference signal (namely, the parameter information mentioned above). When the target reference signal is transmitted (by the base station or the terminal), the base station or the terminal transmits the configured n reference signals on the n OFDM symbols at one time within a specified slot. In addition, it should be noted that when the above target reference signal is a downlink reference signal, if the base station needs to use information of a plurality of panels, for example, if the base station needs to use information of m panels, the base station configures mn downlink reference signals at one time in one slot. Every m reference signals form a group and occupy one OFDM symbol. The m reference signals of each group correspond to m panels of the base station. The m reference signals of each group are a frequency division or code division in one OFDM symbol. The base station transmits the configured mn reference signals on the n OFDM symbols at one time in the specified slot.

In an exemplary embodiment, after the RIS is informed of the OFDM symbol of the target reference signal and the codebook value is configured to the RIS, the method further includes: The RIS switches, on the OFDM symbols where the plurality of target reference signals are distributed, codebooks indicated by the codebook values respectively corresponding to all the target reference signals in sequence, wherein action time of each codebook is from start time to end time of the OFDM. In this embodiment, the base station informs the RIS of the slots of the n reference signals mentioned above and positions of the n OFDM symbols where the reference signals are located. Meanwhile, the base station also needs to configure n codebooks for the RIS, and the reference signals and the codebooks need to correspond to each other one by one. After receiving configuration information of the base station, the RIS switches the n codebooks on the n OFDM symbols where the specified n reference signals are located, and the action time of each codebook is from the start time to the end time of the OFDM symbol. In this embodiment, the base station informs the RIS of the slots of the mn reference signals mentioned above and positions of the n OFDM symbols where the reference signals are located. Meanwhile, the base station also needs to configure n codebooks for the RIS, and the n symbols where the reference signals are located and the codebooks need to correspond to each other one by one. After receiving configuration information of the base station, the RIS switches the n codebooks on the n OFDM symbols where the specified n reference signals are located, and the action time of each codebook is from the start time to the end time of the OFDM symbol.

In an exemplary embodiment, before the measurement result is acquired, the method further includes: A target uplink reference signal is configured to a terminal to instruct the terminal to transmit the target uplink reference signal, wherein the target reference signal includes the target uplink reference signal; and the measurement result is acquired, which includes: The target uplink reference signal reflected by the RIS is measured to obtain the measurement result. This embodiment is an explanation that the terminal sends an uplink reference signal. In this embodiment, after determining the uplink reference signal, the base station will configure the uplink reference signal to the terminal, and then the terminal sends the uplink reference signal to the base station through the RIS.

In an exemplary embodiment, before the measurement result is acquired, the method further includes: A target downlink reference signal is sent to a terminal, wherein the target reference signal includes the target downlink reference signal; and the measurement result is acquired, which includes: The measurement result obtained and reported by measuring, by the terminal, the target downlink reference signal reflected by the RIS is acquired. This embodiment is an explanation that the base station sends a downlink reference signal. In this embodiment, the base station will send the downlink reference signal determined by the base station to the terminal through the RIS.

In an exemplary embodiment, the measurement result reported by the terminal is acquired, which includes: The measurement result, fed back at one time by the terminal on a predetermined time-frequency resource, of each target downlink reference signal among the target downlink reference signals is acquired, wherein a feedback order of each measurement result is consistent with a sending order of each corresponding target downlink reference signal.

In an exemplary embodiment, a target reference signal and a codebook value corresponding to the target reference signal are determined, which includes: A quantity of the target reference signal and a quantity of the codebook value are determined based on a spatial dimension of the target DOA. In this embodiment, when DOA estimation at different dimensions is performed, codebook values (or codebooks) needing to be configured are different. For example, during DOA estimation at a spatial dimension is performed, at least two RIS codebooks and at least two reference signals will be configured at one time. If the configured parameters can perform DOA estimation at two dimensions at one time, at least three RIS codebooks and at least three reference signals will be configured at one time. In this embodiment, if the downlink reference signal mode is adopted, the terminal needs to feed back at one time the measurement results of all the reference signals on the time-frequency resources specified by the base station. These measurement results can be complex numbers or real numbers, and the feedback orders of the measurement results correspond the sending orders of the downlink reference signals one by one.

In an exemplary embodiment, in a case that the target reference signal includes a target downlink reference signal, a quantity of the target reference signal is determined based on a spatial dimension of the target DOA, which includes: A quantity of the target downlink reference signal is determined based on the spatial dimension of the target DOA and information of a target panel.

In an exemplary embodiment, a quantity of the target downlink reference signal is determined based on the spatial dimension of the target DOA and information of a target panel, which includes: The quantity of the target downlink reference signal is determined as n×m, wherein n is an integer greater than the spatial dimension, and m is a quantity of the target panel; wherein every m of the target downlink reference signals form a group and occupy one OFDM symbol; the m target downlink reference signals of each group correspond to m of the target panels; and the m reference signals of each group are transmitted based on a frequency division or code division manner. In this embodiment, when the base station needs to use information of m panels, if the configured parameters can only perform DOA estimation at one spatial dimension at each time, at least two RIS codebooks need to be configured at one time, that is, n is greater than or equal to 2, and the quantity of the reference signals is mn. If the configured parameters can perform DOA estimation at two dimensions at one time, at least three RIS codebooks and at least three reference signals are configured at one time, that is, n is greater than or equal to 3, and the quantity of the reference signals is mn. In addition, the terminal needs to feed back at one time the measurement results of the mn reference signals on the time-frequency resources specified by the base station. These measurement results can be complex numbers or real numbers, and the feedback orders of the mn measurement results correspond the sending orders of the mn reference signals one by one.

In an exemplary embodiment, the method further includes: An RIS beam is selected based on a spatial dimension of the target DOA; and the selected RIS beam is indicated to the RIS.

In an exemplary embodiment, an RIS beam is selected based on a spatial dimension of the target DOA, which includes: In a case that the spatial dimension is one-dimensional, at least two of the RIS beams that are adjacent in the spatial dimension are selected; and in a case that the spatial dimension is two-dimensional, at least two adjacent beams in an azimuth direction and at least two adjacent beams in a pitching direction are selected. In this embodiment, during one-dimensional DOA estimation, beams of the RIS selected by the base station are two or three (of course, more) beams adjacent to each other in this dimension. During two-dimensional DOA estimation, beams of the RIS selected by the base station at least includes two adjacent beams in the azimuth direction and at least two adjacent beams in the pitching direction. When phase information of the reference signals is used and a phase shift generated by Doppler is unavoidable, a required quantity of beams needs to be increased by at least one, and the added beam is a repetition of a certain beam or several beams.

In an exemplary embodiment, the selected RIS beam is indicated to the RIS, which includes: A serial number of a reference beam in the RIS beam is indicated to the RIS; and serial number shift information of other beams in the RIS beam relative to the reference beam is indicated to the RIS, wherein the other beams are beams in the RIS beam other than the reference beam.

In an exemplary embodiment, serial number shift information of other beams in the RIS beam relative to the reference beam is indicated to the RIS, which includes: Azimuth direction serial number shift information and pitching direction serial number shift information of other beams in the RIS beam relative to the reference beam are indicated to the RIS. In this embodiment, it is assumed that the base station needs to indicate K beams to the RIS. The base station uses one of the beams as the reference beam and indicates the serial number of the reference beam to the RIS. At the same time, the base station indicates the serial number shift information of the remaining (K-1) beams relative to the reference beam to the RIS. The beams are numbered. Beam $Beam(ID_{azi} + ID_{azi,offset}, ID_{ele} + ID_{ele,offset})$ deviates $ID_{azi,offset}$ beams in the azimuth direction relative to beam $Beam(ID_{azi}, ID_{ele})$, and deviates $ID_{ele,offset}$ beams in the pitching dimension, where $(ID_{azi}, ID_{ele})$ respectively represent serial numbers in the azimuth direction and the pitching direction, and $ID_{azi,offset}$ and $ID_{ele,offset}$ are greater than 0 or less than 0, representing deviation directions. In this embodiment, during the DOA estimation, if the base station indicates five beams to the RIS, the base station selects one reference beam and transmits the serial number $Beam(ID_{azi}, ID_{ele})$ of the reference beam to the RIS. The base station only needs to transmit $(ID_{azi,offset}, ID_{ele,offset})$ of the remaining four beams to the RIS. An azimuth direction shift $ID_{azi,offset}$ of the four beams only needs to be indicated using 1bit information, and the 1bit information indicates a pitching direction shift $ID_{ele,offset}$

The principle of the present disclosure will be explained below:

Since the RIS end cannot perform data acquisition, but the codebook of the RIS can be changed, the high-precision DOA estimation in the present disclosure first obtains beam domain information by changing the codebook of the RIS, and then the DOA estimation is achieved in a beam domain. The specific principle is as follows:

It is assumed that a matrix number of each panel of the base station is $N_{bs}$, a matrix number of the terminal is $N_{ue}$, and a matrix number of the RIS panel is $N_{ris}$. A channel from the RIS to the base station is $\mathbf{H}_{ris\text{-}bs}$, and a dimension is $N_{ris} \times N_{bs}$. A channel from the UE to the RIS is $\mathbf{H}_{ue\text{-}ris}$, and a dimension is $N_{ue} \times N_{ris}$. A weight value of the RIS is:

$$\mathbf{\Phi}_w = \begin{bmatrix} \Phi_1 & 0 & \cdots & 0 \\ 0 & \Phi_2 & \cdots & 0 \\ 0 & 0 & \ddots & 0 \\ 0 & 0 & \cdots & \Phi_{N_{ris}} \end{bmatrix} \quad (1)$$

A cascade channel of the BS, the RIS, and the UE can be expressed as:

$$\mathbf{H} = \mathbf{H}_{ue-ris} \boldsymbol{\Phi}_w \mathbf{H}_{ris-bs} \quad (2)$$

A dimension of H is $N_{ue} \times N_{bs}$.

It is assumed that a BS-side assignment weight value is $\mathbf{w}_{bs}$, a dimension of which is $1 \times N_{bs}$ ; and a UE-side assignment weight value is $\mathbf{w}_{ue}$, a dimension of which is $1 \times N_{ue}$. Received data after assignment on the BS side and the UE side is:

$$\begin{aligned} y(\boldsymbol{\Phi}_w) &= \mathbf{w}_{ue} \mathbf{H} \mathbf{w}_{bs}^T \\ &= \mathbf{w}_{ue} \mathbf{H}_{ue-ris} \boldsymbol{\Phi}_w \mathbf{H}_{ris-bs} \mathbf{w}_{bs}^T \\ &= \mathbf{w}_{ue} \mathbf{H}_{ue-ris} \boldsymbol{\Phi}_w \left( \mathbf{H}_{ris-bs} \mathbf{w}_{bs}^T \right) \\ &= \mathbf{w}_{ue} \mathbf{H}_{ue-ris} \cdot diag\left( \mathbf{H}_{ris-bs} \mathbf{w}_{bs}^T \right) \cdot diag(\boldsymbol{\Phi}_w) \end{aligned} \quad (3)$$

where diag() represents pulling a diagonal matrix into a column vector and pulling a column vector into a diagonal matrix. A single-path channel can be expressed as

$$\begin{aligned} \mathbf{H}_{ue-ris}^{single\ path} &= \alpha_{ue-ris} \cdot \left( \mathbf{a}_{ue-ris} \mathbf{a}_{ris-ue}^T \right) \\ \mathbf{H}_{ris-bs}^{single\ path} &= \alpha_{ris-bs} \cdot \left( \mathbf{a}_{ris-bs} \mathbf{a}_{bs-ris}^T \right) \end{aligned} \quad (4)$$

where $\mathbf{H}_{ue-ris}^{single\ path}$ and $\mathbf{H}_{ris-bs}^{single\ path}$ respectively represent single-path channels from the UE to the RIS and from the RIS to the BS; $\alpha_{ue-ris}$ and $\alpha_{ris-bs}$ represent complex amplitudes of the paths; $\mathbf{a}_{ue-ris}$ and $\mathbf{a}_{ris-ue}^T$ respectively represent steering vectors of a UE and RIS connection path on the UE side and the RIS side, which are vectors related to a UE side angle and an RIS side angle of the UE and RIS connection path; and $\mathbf{a}_{ris-bs}$ and $\mathbf{a}_{bs-ris}^T$ respectively represent steering vectors of an RIS and BS connection path on the RIS side and the BS side, which are vectors related to an RIS side angle and a BS side angle of the RIS and BS connection path. For a single path, the received data of formula (3) can be expressed as:

$$\begin{aligned} y &= \mathbf{w}_{ue} \mathbf{H}_{ue-ris} \cdot diag\left( \mathbf{H}_{ris-bs} \mathbf{w}_{bs}^T \right) \cdot diag(\boldsymbol{\Phi}_w) \\ &= \alpha_{ue-ris} \cdot \alpha_{ris-bs} \cdot \mathbf{w}_{ue} \cdot \left( \mathbf{a}_{ue-ris} \mathbf{a}_{ris-ue}^T \right) diag\left( \left( \mathbf{a}_{ris-bs} \mathbf{a}_{bs-ris}^T \right) \mathbf{w}_{bs}^T \right) \cdot diag(\boldsymbol{\Phi}_w) \\ &= \left( diag(\boldsymbol{\Phi}_w) \right)^T \cdot \left[ \mathbf{a}_{ris-ue}^T \cdot diag(\mathbf{a}_{ris-bs}) \right]^T \cdot \alpha_{ue-ris} \cdot \alpha_{ris-bs} \cdot \beta_{ue} \cdot \beta_{bs} \end{aligned} \quad (5)$$

where $\beta_{ue} = \mathbf{w}_{ue} \mathbf{a}_{ue-ris}$ and $\beta_{bs} = \mathbf{a}_{bs-ris}^T \mathbf{w}_{bs}^T$ are scalars, which are respectively complex amplitudes after the path is assigned using the UE-side and BS-side assignment weight values. In formula (5), the essence of the RIS codebook (DOA estimation) is to estimating a steering vector $\mathbf{a}_{ris-ue}^H diag(\mathbf{a}_{ris-bs})$ of the RIS, and a weight value of beam space transformation is $diag(\boldsymbol{\Phi}_w)$, that is, an RIS wide beam codebook needing to be switched for multiple times in the present disclosure. In this way, the present disclosure transforms the problem of coverage enhancement performed by the RIS on the terminal into the problem of DOA estimation in the beam space. The essence of the DOA estimation performed the RIS on the terminal is to estimate a more precise RIS codebook from a plurality of $y(\boldsymbol{\Phi}_w)$ in the beam space under different $\boldsymbol{\Phi}_w$. At this time, the UE-side assignment weight value $\mathbf{w}_{ue}$ and the BS-side assignment weight value $\mathbf{w}_{bs}$ need to be kept unchanged. In the subsequent DOA estimation, a commonly used DOA estimation method based on a beam space is used, and $y(\boldsymbol{\Phi}_w)$ is a measured value of the beam space. Estimation of the more precise RIS codebook (from which, a corresponding DOA can be acquired) can be expressed using the following formula:

$$\mathbf{\Phi}_{w,optimal} = f\left(y\left(\mathbf{\Phi}_{w,1}\right), y\left(\mathbf{\Phi}_{w,2}\right), ..., y\left(\mathbf{\Phi}_{w,K}\right)\right) \quad (6)$$

where f() is the method for estimating the DOA in the beam space, and K is a quantity of RIS codebooks used in the beam space.

Obviously, the steering vector corresponding to the estimated angle $(\theta, \varphi)$ is matched with $\mathbf{a}_{ris-ue}^{T} diag\left(\mathbf{a}_{ris-bs}\right)$, and is just related to an incidence angle and a reflection angle of the RIS panel. The steering vector can be used as a codebook of a narrow beam.

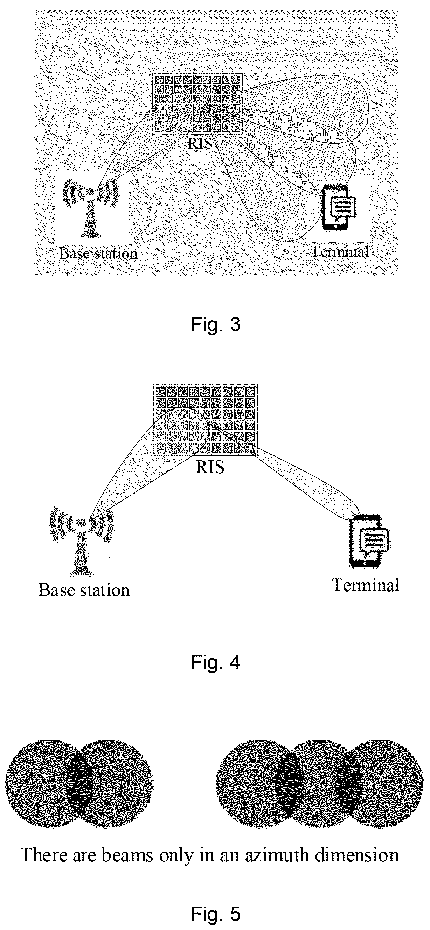

After determining a rough beam of the terminal relative to the RIS, the present disclosure needs to keep the assignment weight values on the base station side and the terminal unchanged, and a plurality of different codebooks of the RIS are switched to cover possible positions of the terminal relative to the RIS, as shown in FIG. 3.

After the base station estimates the more precise codebook (or DOA) of the terminal relative to the RIS by using the measured data of the beam space, the codebook of the RIS is switched through signaling, so that the RIS achieves more precise beam alignment, tracking, positioning, and the like on the terminal, as shown in FIG. 4.

During the DOA estimation in the beam space, a plurality of beams need to be selected. Since the RIS has many beams. If the codebook or beam serial number of each beam is indicated to the RIS, the signaling overhead is extremely large. The present disclosure takes a certain beam as a reference, a signaling indication method with a small overhead is proposed. It is assumed that the base station needs to indicate K beams to the RIS. The base station uses one of the beams as the reference beam and indicates the serial number of the reference beam to the RIS. At the same time, the base station indicates the serial number information of the remaining (K-1) beams relative to the reference beam to the RIS.

The beams are numbered. Beam $Beam(ID_{azi} + ID_{azi,offset}, ID_{ele} + ID_{ele,offset})$ deviates $ID_{azi,offset}$ beams in the azimuth direction relative to beam $Beam(ID_{azi}, ID_{ele})$, and deviates $ID_{ele,offset}$ beams in the pitching dimension, where $(ID_{azi}, ID_{ele})$ respectively represent serial numbers in the azimuth direction and the pitching direction, and $ID_{azi,offset}$ and $ID_{ele,offset}$ are greater than 0 or less than 0, representing deviation directions.

If the base station selects one reference beam and transmits the serial number $Beam(ID_{azi}, ID_{ele})$ of the reference beam to the RIS, the base station only needs to transmit $(ID_{azi,offset}, ID_{ele,offset})$ of the remaining (K-1) beams to the RIS. For example, five beams are selected at most, namely, K=5. In addition to indicating the serial number $Beam(ID_{azi}, ID_{ele})$ of the reference beam, the azimuth direction shift $ID_{azi,offset}$ of each of the remaining beams only needs to be indicated using the 1bit information, and the 1bit information indicates the pitching direction shift $ID_{ele,offset}$. Transmitted information of the K beams can be simplified as $Beam(ID_{azi}, ID_{ele})$, $(ID_{azi,offset\_1}, ID_{ele,offset\_1})$, ..., $(ID_{azi,offset\_K-1}, ID_{ele,offset\_K-1})$, or in another sequencing form.

In addition to the above manner, some additional fixed beam patterns can also be defined. The selected K beams are determined based on the reference beam and the selected beam patterns, which can be roughly classified into the following several types:

1. DOA estimation in one-dimensional azimuth direction

As shown in FIG. 5, if only the DOA estimation in the azimuth direction is performed, two or three adjacent different beams can be generally selected. In order to reduce the complexity, the following beam indication methods can be used: When two beams are used for the DOA estimation in the azimuth direction, only the serial number of one of the beams can be indicated, and the other beam is considered as an adjacent left beam or right beam in the azimuth direction by default.

When three beams are used for the DOA estimation in the azimuth direction, only the serial number of one of the beams is indicated, and positions of the other two beams can be set in advance. If the other two beams can be specified in advance as left and right beams adjacent to the above beam in the azimuth direction, the two beams can be specified in advance as two beams on the left side or two beams on the right side adjacent to the above beam in the azimuth direction.

2. DOA estimation in one-dimensional pitching direction

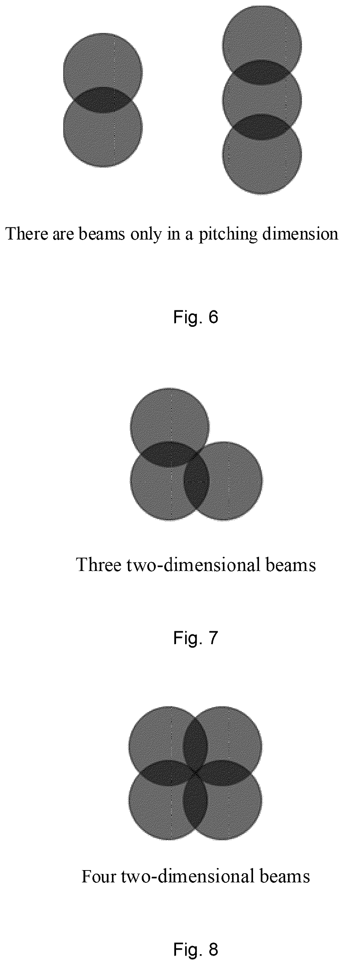

As shown in FIG. 6, if only the DOA estimation in the pitching direction is performed, two or three adjacent different beams can be generally selected. In order to reduce the complexity, the following beam indication methods can be used: When two beams are used for the DOA estimation in the pitching direction, only the serial number of one of the beams can be indicated, and the other beam is considered as an adjacent upper beam or lower beam in the azimuth direction by default.

When three beams are used for the DOA estimation in the pitching direction, only the serial number of one of the beams is indicated, and positions of the other two beams can be set in advance. If the other two beams can be specified in advance as upper and lower beams adjacent to the above beam in the pitching direction, the two beams can be specified in advance as two beams on the upper side or two beams on the lower side adjacent to the above beam in the pitching direction.

3. Three different beams are used to perform two-dimensional DOA estimation

During the two-dimensional DOA estimation, at least three adjacent different beams are selected, which are characterized in that there are two adjacent beams in the azimuth direction and two adjacent beams in the pitching direction. One beam pattern is as shown in FIG. 7.

4. Four different beams are used to perform two-dimensional DOA estimation

During the two-dimensional DOA estimation, if four adjacent different beams are selected, which are characterized in that there are at least two adjacent beams in the azimuth direction and at least two adjacent beams in the pitching direction. One beam pattern is as shown in FIG. 8.

5. Five different beams are used to perform two-dimensional DOA estimation

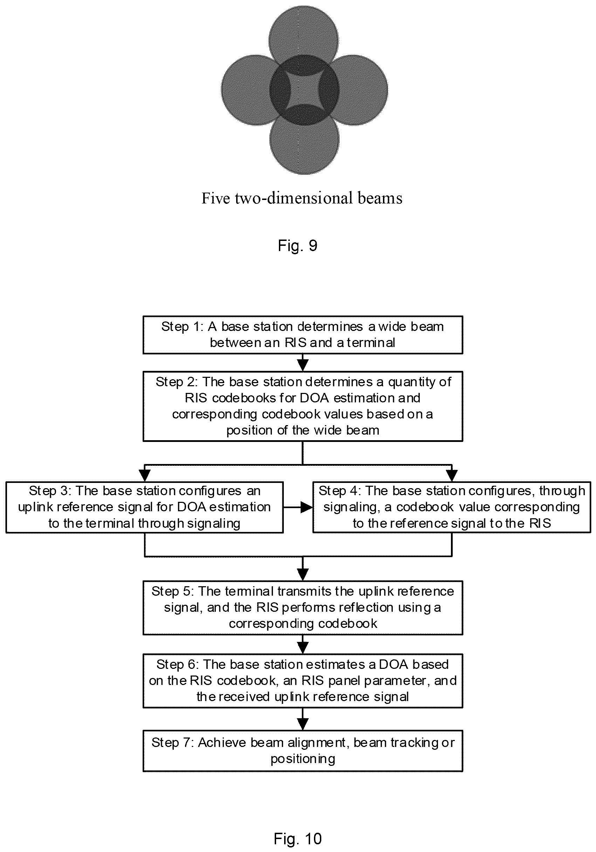

During the two-dimensional DOA estimation, if five adjacent different beams are selected, which are characterized in that there are at least two adjacent beams in the azimuth direction and at least two adjacent beams in the pitching direction. One beam pattern is as shown in FIG. 9.

If an angle in only one dimension is estimated during each DOA estimation, relevant configuration requirements are as follows:

If phase shifts on different symbols caused by the Doppler effect can be ignored or the beam domain DOA estimation method does not use the phase information, at least two different beams need to be configured. These beams are distributed in different symbols in one slot. At this time, at least two reference signals and at least two RIS codebooks need to be configured at one time. One reference signal on each symbol correspond to one RIS codebook. Beam patterns corresponding to the RIS codebooks are beams adjacent in an estimation dimension (as shown in FIG. 5 or FIG. 6). A typical beam number, RIS codebook number, and reference signal number are 2 or 3. The beams of the base station and the beams of the terminal are kept unchanged throughout the entire process of the transmission of the reference signals.

If the phase shifts on different symbols caused by the Doppler effect cannot be ignored and the beam domain DOA estimation method uses the phase information, the numbers of the parameters configured above need to be added by at least 1. At least two of the configured beams and at least two of the configured RIS codebooks are the same. A typical beam number, RIS codebook number, and reference signal number are 3 or 4. The beam patterns corresponding to the RIS codebooks are beams adjacent in dimension (as shown in FIG. 5 or FIG. 6), where one beam needs to be repeated once for Doppler compensation. The beams of the base station and the beams of the terminal are kept unchanged throughout the entire process of the transmission of the reference signals.

It should be noted that if an angle of only one dimension can be estimated based on the configuration of each DOA estimation, an angle of another dimension will be estimated by performing configuration again, so that a complete two-dimensional angle can be obtained.

If a two-dimensional angle is directly estimated in each DOA estimation, relevant configuration requirements are as follows:

If phase shifts on different symbols caused by the Doppler effect can be ignored or the beam domain DOA estimation method does not use the phase information, at least three different beams need to be configured. These beams are distributed in different symbols in one slot. At this time, the base station needs to configure at least three reference signals and at least three RIS codebooks need at one time. One reference signal on each symbol correspond to one RIS codebook. Beam patterns corresponding to the RIS codebooks are beams that need to be adjacent in both the azimuth direction and the pitching direction (as shown in FIG. 7, FIG. 8, or FIG. 9). A typical beam number, RIS codebook number, and reference signal number are 3 or 4. The beams of the base station and the beams of the terminal are kept unchanged throughout the entire process of the transmission of the reference signals.

If the phase shifts on different symbols caused by the Doppler effect cannot be ignored and the beam domain DOA estimation method uses the phase information, the numbers of the parameters configured above need to be added by at least 1. At least two of the configured beams and at least two of the configured RIS codebooks are the same. A typical beam number, RIS codebook number, and reference signal number are 4 or 5. The beam patterns corresponding to the RIS codebooks are beams that need to be adjacent in both the azimuth direction and the pitching direction (as shown in FIG. 7, FIG. 8, or FIG. 9), where one beam needs to be repeated once for Doppler compensation. The beams of the base station and the beams of the terminal are kept unchanged throughout the entire process of the transmission of the reference signals.

The reference signals corresponding to different symbols in all the parameters configured for each DOA estimation should occupy the same RE or at least occupy the same RB.

If downlink reference signals are used for the DOA estimation, and a plurality of pieces (n is assumed) of panel information are desired to be used together, the quantity of the reference signals on each symbol needs to be added by n times, and n panels should correspond to n reference signals for frequency division or code division on one symbol. At this time, the quantity of the reference signals is equal to n times of the symbol number or RIS codebook number adopted. The measured values fed back by the terminal to the base station are complex numbers which should correspond to the panels and the RIS codebooks one by one.

The present disclosure will be explained below with reference to specific embodiments:

In specific embodiment 1, the terminal transmits an uplink reference signal:

When the terminal transmits a reference signal, a specific implementation flow is as shown in FIG. 10. The flow includes the following steps:

Step 1: The base station determines a scanning beam (which can be generally a wide beam or a narrow beam), where the energy on the RIS side is highest, between the RIS and the terminal. If necessary, a next strongest beam in the azimuth direction or pitching direction of the strongest beam also needs to be determined. This process can be obtained through a synchronous reference signal, beam scanning, prior information, or the like.

Step 2: The base station determines a quantity (namely, K) of the RIS codebooks and corresponding RIS codebook values $\Phi_{w,1}, \Phi_{w,2}, ..., \Phi_{w,K}$ for the DOA estimation based on the strongest beam of the terminal relative to the RIS and the positions of the strong beams adjacent to the strongest beam in the azimuth and pitching directions. The patterns of the RIS codebooks, as mentioned above, need to have adjacent beams in the azimuth and pitching directions. If three beams need to be selected, the strongest beam, the strong beam adjacent to the strongest beam in the azimuth direction, and the strong beam adjacent to the strongest beam in the pitching direction can be selected (if the Doppler phase effect between different symbols need to be considered, at least four groups of codebook values are required, among which, two groups of codebook values are the same, that is, one beam needs to be repeated once). The base station can select a codebook serial number $Beam(ID_{azi}, ID_{ele})$ of the strongest beam, a relative shift $(ID_{azi,offset\_1}, 0)$ of the strong beam adjacent to the strongest beam in the azimuth direction, and a relative shift $(0, ID_{ele,offset\_2})$ of the strong beam adjacent to the strongest beam in the pitching direction. When three beams are selected, element 0 can be saved (namely, the shift is 0), thus reducing the resource cost.

Step 3: The base station configures uplink reference signals for DOA estimation to the terminal at one time through signaling based on the required quantity of the RIS codebooks in the previous step. Different reference signals should be on different symbols in one slot.

Step 4: The base station configures the quantity of the codebook values in Step 2 to the RIS through signaling. Each group of codebook values corresponds to a group of time-domain resource positions of the uplink reference signals in Step 3. The action time of the group of codebook values should be effective from start of receiving of the corresponding reference signals to end of the receiving.

Step 5: The terminal transmits a plurality of groups of uplink reference signals on the corresponding time-frequency resources based on the signaling of the base station. The RIS synchronously switches the corresponding codebook values based on the signaling of the base station. The terminal needs to keep assignment weight value on the terminal side unchanged during the transmission of these uplink reference signals. The RIS maintains its codebook values unchanged when reflecting each group of reference signals.

Step 6: The base station receives the uplink reference signals. In the process of receiving these reference signals, the base station needs to keep a receiving beam unchanged. The base station makes the received uplink reference signals correspond to the codebook values of the RIS one by one to obtain $y(\Phi_{w,1}), y(\Phi_{w,2}), ..., y(\Phi_{w,K})$ Based on the received uplink reference signals, the RIS codebook values, and RIS panel parameters, the base station estimates a more precise RIS codebook or DOA in the beam space using the DOA estimation method. If a phase value is used in the DOA estimation process, it is necessary to compensate for an initial phase difference at different times $y(\Phi_{w,1}), y(\Phi_{w,2}), ..., y(\Phi_{w,K})$.

Step 7: The base station switches the RIS codebook parameters to achieve more precise beam alignment, beam tracking, positioning, and other operations based on the DOA estimated in the previous step.

Through this embodiment, the base station, the RIS, and the terminal only have several signaling interactions, so that the volume of interaction data is small.

In specific embodiment 2, the base station transmits a reference signal:

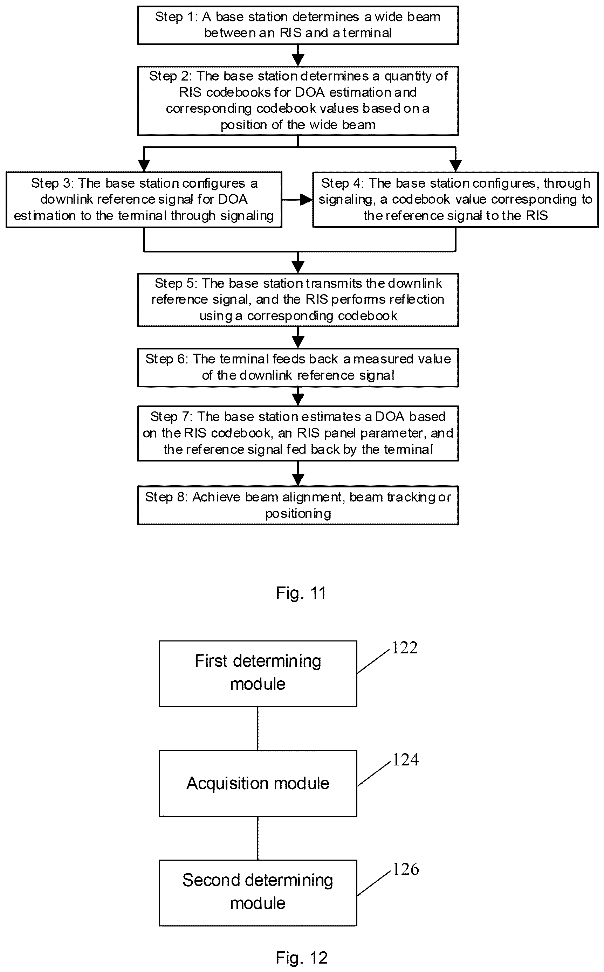

When the base station transmits a reference signal, a specific implementation flow is as shown in FIG. 11. The flow includes the following steps:

Step 1: The base station determines a scanning beam (which can be generally a wide beam or a narrow beam), where the energy on the RIS side is highest, between the RIS and the terminal. If necessary, a next strongest beam in the azimuth direction or pitching direction of the strongest beam also needs to be determined. This process can be obtained through a synchronous reference signal, beam scanning, prior information, or the like.

Step 2: The base station determines a quantity of the RIS codebooks and corresponding RIS codebook values $\Phi_{w,1}$, $\Phi_{w,2}$,..., $\Phi_{w,K}$ for the DOA estimation based on the strongest beam of the terminal relative to the RIS and the positions of the strong beams adjacent to the strongest beam in the azimuth and pitching directions. The patterns of the RIS codebooks, as mentioned above, need to have adjacent beams in the azimuth and pitching directions. If three beams need to be selected, the strongest beam, the strong beam adjacent to the strongest beam in the azimuth direction, and the strong beam adjacent to the strongest beam in the pitching direction can be selected (if the Doppler phase effect between different symbols need to be considered, at least four groups of codebook values are required, among which, two groups of codebook values are the same, that is, one beam needs to be repeated once, and the strongest beam can be repeated once). The base station can select a codebook serial number $Beam(ID_{azi}, ID_{ele})$ of the strongest beam, a relative shift $(ID_{azi,offset\_1}, 0)$ of the strong beam adjacent to the strongest beam in the azimuth direction, and a relative shift $(0, ID_{ele,offset\_2})$ of the strong beam adjacent to the strongest beam in the pitching direction. When three beams are selected, element 0 can be saved, thus reducing the resource cost.

Step 3: The base station configures downlink reference signals for DOA estimation to the terminal at one time through signaling based on the required quantity of the RIS codebooks in the previous step. Different reference signals should be on different symbols in one slot. If the base station requires a plurality of panels to jointly estimate a DOA, assuming that n panels need to be used, a quantity of the downlink reference signals needing to be configured is n times the quantity of the RIS codebooks, and n reference signals of frequency division or code division are configured on each symbol.

Step 4: The base station configures the codebook values in Step 2 to the RIS through signaling. Each group of codebook values corresponds to a group of resource positions of the downlink reference signals in Step 3. The action time of the group of codebook values should be effective from start of receiving of the corresponding reference signals to end of the receiving.

Step 5: The base station transmits a plurality of groups of downlink reference signals on the configured time-frequency resources. The RIS synchronously switches the corresponding codebook values based on the signaling of the base station. The base station needs to keep the assignment weight value on the base station side unchanged during the transmission of these downlink reference signals. The RIS maintains its codebook values unchanged when reflecting each group of reference signals.

Step 6: The terminal receives the downlink reference signals. In the process of receiving these reference signals, the terminal needs to keep a receiving beam unchanged. After measuring the downlink reference signals, the terminal feeds back measured values to the base station, for example, feeding back a complex amplitude of the strongest path or a plurality of paths corresponding to a channel time-domain tap. These feedback values should correspond to the RIS codebooks and the panels one by one. The base station can know that the feedback orders can be specified in advance or an indication value can be used for indication. The terminal can perform the feedback by, but not limited to, radio resource control, RRC.

Step 7: The base station makes the measured values of the downlink reference signals fed back by the terminal be in one-to-one correspondence to the RIS codebooks corresponding to each group of reference signals, and obtains $y(\Phi_{w,1}), y(\Phi_{w,2}),..., y(\Phi_{w,K})$. If the base station uses n panels to jointly estimate a DOA, information fed back by the terminal needs to be expanded by n times. The n panels can perform feedback separately or jointly. Based on the measured values fed back by the terminal, the RIS codebook values, and RIS panel parameters, the base station estimates a more precise RIS codebook or DOA in the beam space using the DOA estimation method. If a phase value is used in the DOA estimation process, it is necessary to compensate for an initial phase difference at different times $y(\Phi_{w,1}), y(\Phi_{w,2}),..., y(\Phi_{w,K})$.

Step 8: The base station switches the RIS codebook parameters to achieve more precise beam alignment, beam tracking, positioning, and other operations based on the DOA estimated in the previous step.

Through this embodiment, the downlink reference signals have high power, which can achieve high angle measurement precision.

The present disclosure relates to a high-precision DOA estimation method for an RIS, particularly, to angle estimation, beam training, beam tracking, and the like of the RIS in the field of communications. The present disclosure achieves high-precision angle estimation in a beam domain by repeatedly changing the assignment weight values of the RIS, which can effectively reduce the quantity of the scanning beams during beam training and improve the power of the receiving end.

According to the descriptions in the foregoing implementations, a person skilled in the art may clearly learn that the method according to the foregoing embodiments may be implemented by relying on software and an essential commodity hardware platform or by using hardware, but the former is a better implementation in most cases. Based on such an understanding, the technical solutions of the present disclosure essentially, or the part contributing to the existing technology, may be presented in the form of a software product. The computer software product is stored in a storage medium (for example, a read-only memory, ROM/random access memory, RAM, a magnetic disk, or an optical disk) including several instructions to enable a terminal device (which may be a mobile phone, a computer, a server, a network device, or the like) to perform the methods described in all the embodiments of the present disclosure.

This embodiment further provides an apparatus for determining a DOA. The apparatus is configured to implement the above embodiments and preferred implementations. Those contents that have been described will not be elaborated. As used below, the term "module" can be a combination of software and/or hardware that implements a predetermined function. Although the apparatus described in the following embodiments is preferably implemented in software, the implementation of hardware or a combination of software and hardware is also possible and envisioned.

FIG. 12 is a block structural diagram of an apparatus for determining a DOA according to an embodiment of the present disclosure. As shown in FIG. 12, the apparatus includes:

a first determining module 122, configured to: determine a target reference signal and a codebook value corresponding to the target reference signal, and configure the codebook value to an RIS;

an acquisition module 124, configured to acquire a measurement result obtained after a receiving end measures the target reference signal which is reflected by the RIS to the receiving end, wherein the RIS correspondingly reflects the reference signal based on the codebook value; and

a second determining module 126, configured to determine a target DOA based on the measurement result.

In an exemplary embodiment, the first determining module 122 is configured to determine a codebook value corresponding to the target reference signal in the following way: determining target beams between the RIS and a terminal, and determining the codebook value based on positions of the target beams.

In an exemplary embodiment, the first determining module 122 is configured to determine target beams between the RIS and a terminal in the following way: determining a strongest beam, where the energy on the RIS side exceeds a predetermined threshold, between the RIS and the terminal; and taking the strongest beam and a beam that satisfies a target relationship with the strongest beam as the target beams, wherein the beam that satisfies the target relationship with the strongest beam includes at least one of the following: a next strongest beam adjacent to the strongest beam in an azimuth direction, and a next strongest beam adjacent to the strongest beam in a pitching direction.

In an exemplary embodiment, the first determining module 122 is configured to determine a target reference signal in the following way: configuring a preset quantity of the target reference signals in one slot, wherein each target reference signal occupies an orthogonal frequency division multiplexing, OFDM, symbol. The first determining module 122 is further configured to notify the terminal and the RIS of parameter information of the target reference signal, after determining the target reference signal, wherein the parameter information includes at least one of the following: slot information, an OFDM symbol, a frequency domain position, and a mother code parameter.

In an exemplary embodiment, after the RIS receives the OFDM symbol of the target reference signal informed by the base station and is configured with the codebook value, the RIS switches, on the OFDM symbols where the plurality of target reference signals are distributed, codebooks indicated by the codebook values respectively corresponding to all the target reference signals in sequence, wherein action time of each codebook is from start time to end time of the OFDM.

In an exemplary embodiment, the above apparatus is further configured to configure, before the measurement result is acquired, a target uplink reference signal to a terminal to instruct the terminal to transmit the target uplink reference signal, wherein the target reference signal includes the target uplink reference signal; and the measurement result is acquired, which includes: The target uplink reference signal reflected by the RIS is measured to obtain the measurement result.

In an exemplary embodiment, the above apparatus is further configured to send, before the measurement result is acquired, a target downlink reference signal to a terminal, wherein the target reference signal includes the target downlink reference signal; and the measurement result is acquired, which includes: The measurement result obtained and reported by measuring, by the terminal, the target downlink reference signal reflected by the RIS is acquired.

In an exemplary embodiment, the above apparatus is configured to acquire the measurement result reported by the terminal in the following way: acquiring the measurement result, fed back at one time by the terminal on a predetermined time-frequency resource, of each target downlink reference signal among the target downlink reference signals, wherein a feedback order of each measurement result is consistent with a sending order of each corresponding target downlink reference signal.

In an exemplary embodiment, the first determining module 122 is configured to determine a target reference signal and a codebook value corresponding to the target reference signal in the following way: determining a quantity of the target reference signal and a quantity of the codebook value based on a spatial dimension of the target DOA.

In an exemplary embodiment, in a case that the target reference signal includes a target downlink reference signal, the determining module 122 is configured to determine a quantity of the target reference signal based on a spatial dimension of the target DOA in the following way: determining a quantity of the target downlink reference signal based on the spatial dimension of the target DOA and information of a target panel.

In an exemplary embodiment, the first determining module 122 is configured to determine a quantity of the target downlink reference signal based on the spatial dimension of the target DOA and information of a target panel in the following way: determining the quantity of the target downlink reference signal as $n \times m$, wherein n is an integer greater than the spatial dimension, and m is a quantity of the target panel; wherein every m of the target downlink reference signals form a group and occupy one OFDM symbol; the m target downlink reference signals of each group correspond to m of the target panels; and the m reference signals of each group are transmitted based on a frequency division or code division manner.

In an exemplary embodiment, the apparatus is further configured to: select an RIS beam based on a spatial dimension of the target DOA; and indicate the selected RIS beam to the RIS.

In an exemplary embodiment, the apparatus is configured to select an RIS beam based on a spatial dimension of the target DOA in the following way: in a case that the spatial dimension is one-dimensional, selecting at least two of the RIS beams that are adjacent in the spatial dimension; and in a case that the spatial dimension is two-dimensional, selecting at least two adjacent beams in an azimuth direction and at least two adjacent beams in a pitching direction.

In an exemplary embodiment, the apparatus is configured to indicate the selected RIS beam to the RIS in the following way: indicating a serial number of a reference beam in the RIS beam to the RIS; and indicating serial number shift information of other beams in the RIS beam relative to the reference beam to the RIS, wherein the other beams are beams in the RIS beam other than the reference beam.

In an exemplary embodiment, the apparatus is configured to indicate serial number shift information of other beams in the RIS beam relative to the reference beam to the RIS in the following way: indicating azimuth direction serial number shift information and pitching direction serial number shift information of other beams in the RIS beam relative to the reference beam to the RIS.

It should be noted that the above modules can be implemented through software or hardware. For the latter, the various modules can be implemented in the following ways, but not limited to: The above modules are all located in the same processor; or, the aforementioned modules can be located in different processors in the form of any combination.

The embodiments of the present disclosure further provide a computer readable storage medium. The computer readable storage medium stores a computer program. The computer program is configured to perform the steps in any one of the method embodiments when run.

In an exemplary embodiment, the computer readable storage medium mentioned above can include but not limited to: various media that can store computer programs, such as a USB flash drive, a ROM, a RAM, a mobile hard disk drive, a magnetic disk, and an optical disk.

The embodiments of the present disclosure further provide an electronic apparatus, including a memory and/or a processor. The memory stores a computer program. The processor is configured to run the computer program to perform the steps in any one of the method embodiments.

In an exemplary embodiment, the aforementioned electronic apparatus may further include a transmission device and an input/output device, wherein the transmission device is connected to the above processor, and the input/output device is connected to the above processor.

The specific examples in this embodiment can refer to the examples described in the above embodiments and exemplary implementations, and will not be elaborated in this embodiment.

Obviously, those skilled in the art should understand that the various modules or steps of the present disclosure can be implemented using a universal computing apparatus, which can be concentrated on a single computing apparatus or distributed on a network composed of a plurality of computing apparatuses. The modules or steps can be implemented using program codes that can be executed by a computing apparatus, so that the modules or steps can be stored in a storage apparatus for execution by the computing apparatus. Furthermore, in some cases, the steps shown or described can be executed in an order different from those here, or the steps can be separately made into various integrated circuit modules, or a plurality of modules or steps among the modules or steps can be made into single integrated circuit modules for implementation. In this way, the present disclosure is not limited to any specific combinations of hardware and software.

The above descriptions are only preferred embodiments of the present disclosure, and are not intended to limit the present disclosure. Those skilled in the art can make various changes and transformations on the present disclosure. Any modification, equivalent replacement, and improvement made within the principle of the present disclosure shall fall within the protection scope of the present disclosure.

**Claims**

1. A method for determining a direction of arrival, DOA, comprising:

   determining target reference signals and codebook values corresponding to the target reference signals, and configuring the codebook values to a reconfigurable intelligent surface, RIS;
   acquiring measurement results obtained after a receiving end measures the target reference signals which are reflected by the RIS to the receiving end, wherein the RIS correspondingly reflects the reference signals based on the codebook values; and
   determining a target DOA based on the measurement results.

2. The method according to claim 1, wherein the determining codebook values corresponding to the target reference signals comprises:

   determining target beams between the RIS and a terminal; and
   determining the codebook values based on positions of the target beams.

3. The method according to claim 2, wherein the determining target beams between the RIS and a terminal comprises:

   determining a strongest beam, where energy at the RIS exceeds a predetermined threshold, between the RIS and the terminal; and
   determining the strongest beam and a beam that satisfies a target relationship with the strongest beam as the target beams, wherein the beam that satisfies the target relationship with the strongest beam comprises at least one of the following:
   a next strongest beam adjacent to the strongest beam in an azimuth direction, and a next strongest beam adjacent to the strongest beam in a pitching direction.

4. The method according to claim 1, wherein

   the determining target reference signals comprises: configuring a preset quantity of target reference signals within one slot, wherein each target reference signal occupies an orthogonal frequency division multiplexing, OFDM symbol;
   after the determining the target reference signals, the method further comprises: informing the terminal and the RIS of parameter information of the target reference signals, wherein the parameter information comprises at least one of the following: slot information, an OFDM symbol, a frequency domain position, and a mother code parameter.

5. The method according to claim 4, wherein after the informing the RIS of the OFDM symbol of the target reference signals and the configuring the codebook values to the RIS, the method further comprises:

   switching, on the OFDM symbols where the plurality of target reference signals are distributed, by the RIS, codebooks indicated by the codebook values respectively corresponding to all the target reference signals in sequence,
   wherein action time of each codebook is from start time to end time of the OFDM symbol.

6. The method according to claim 1, wherein

   before the acquiring the measurement results, the method further comprises: configuring target uplink reference signals to a terminal to instruct the terminal to transmit the target uplink reference signals, wherein the target reference signals comprises the target uplink reference signals; and

the acquiring the measurement results comprises: measuring the target uplink reference signals reflected by the RIS to obtain the measurement results.

7. The method according to claim 1, wherein

before the acquiring the measurement results, the method further comprises: sending target downlink reference signals to a terminal, wherein the target reference signals comprises the target downlink reference signals; and the acquiring the measurement results comprises: acquiring the measurement results obtained and reported by measuring, by the terminal, the target downlink reference signals reflected by the RIS.

8. The method according to claim 7, wherein the acquiring the measurement results reported by the terminal comprises: acquiring the measurement results, fed back at one time by the terminal on a predetermined time-frequency resource, of each target downlink reference signal among the target downlink reference signals, wherein a feedback order of each measurement result is consistent with a sending order of each corresponding target downlink reference signal.

9. The method according to claim 1, wherein the determining target reference signals and codebook values corresponding to the target reference signals comprises:
determining a quantity of target reference signals and a quantity of the codebook values based on a spatial dimension of the target DOA.

10. The method according to claim 9, wherein in a case that the target reference signals comprises target downlink reference signals, the determining a quantity of the target reference signals based on a spatial dimension of the target DOA comprises:
determining a quantity of the target downlink reference signals based on the spatial dimension of the target DOA and information of target panels.

11. The method according to claim 10, wherein the determining a quantity of the target downlink reference signals based on the spatial dimension of the target DOA and information of target panels comprises:

determining the quantity of the target downlink reference signals as $n \times m$, wherein n is an integer greater than the spatial dimension, and m is a quantity of target panels;
wherein every m of the target downlink reference signals form a group and occupy one OFDM symbol; the m target downlink reference signals of each group correspond to m of the target panels; and the m reference signals of each group are transmitted based on a frequency division or code division manner.

12. The method according to claim 1, wherein the method further comprises:

selecting RIS beams based on a spatial dimension of the target DOA; and
indicating the selected RIS beams to the RIS.

13. The method according to claim 12, wherein the selecting RIS beams based on a spatial dimension of the target DOA comprises:

in a case that the spatial dimension is one-dimensional, selecting at least two of the RIS beams that are adjacent in the spatial dimension; and
in a case that the spatial dimension is two-dimensional, selecting at least two adjacent beams in an azimuth direction and at least two adjacent beams in a pitching direction.

14. The method according to claim 12, wherein the indicating the selected RIS beams to the RIS comprises:

indicating a serial number of a reference beam in the RIS beams to the RIS; and
indicating serial number shift information of other beams in the RIS beams relative to the reference beam to the RIS, wherein the other beams are beams in the RIS beams other than the reference beam.

15. The method according to claim 14, wherein the indicating serial number shift information of other beams in the RIS beams relative to the reference beam to the RIS comprises:
indicating azimuth direction serial number shift information and pitching direction serial number shift information of other beams in the RIS beams relative to the reference beam to the RIS.

16. An apparatus for determining a DOA, comprising:

a determining module, configured to: determine target reference signals and codebook values corresponding to the target reference signals, and configure the codebook values to a reconfigurable intelligent surface, RIS; an acquisition module, configured to acquire measurement results obtained after a receiving end measures the target reference signals which are reflected by the RIS to the receiving end, wherein the RIS correspondingly reflects the reference signals based on the codebook values; and a determining module, configured to determine a target DOA based on the measurement results.

17. A computer readable storage medium, wherein the computer readable storage medium stores a computer program, and the computer program, when executed by a processor, implements the steps of the method according to any one of claims 1 to 15.

18. An electronic apparatus, comprising a memory, a processor, and a computer program stored on the memory and runnable on the processor, wherein the processor executes the computer program to implement the steps of the method according to any one of claims 1 to 15.

Input/output
device **108**

Transmission
device **106**

Processor
**102**

Memory
**104**

Fig. 1

| |
|---|
| Determine a target reference signal and a codebook value corresponding to the target reference signal, and configure the codebook value to a reconfigurable intelligent surface (RIS) |

S202

| |
|---|
| Acquire a measurement result obtained after a receiving end measures the target reference signal which is reflected by the RIS to the receiving end, wherein the RIS correspondingly reflects the reference signal based on the codebook value |

S204

| |
|---|
| Determine a target DOA based on the measurement result |

S206

Fig. 2

Fig. 3

Fig. 4

There are beams only in an azimuth dimension

Fig. 5

There are beams only in a pitching dimension

Fig. 6

Three two-dimensional beams

Fig. 7

Four two-dimensional beams

Fig. 8

Five two-dimensional beams

Fig. 9

Step 1: A base station determines a wide beam
between an RIS and a terminal

↓

Step 2: The base station determines a quantity of
RIS codebooks for DOA estimation and
corresponding codebook values based on a
position of the wide beam

↓

| Step 3: The base station configures an uplink reference signal for DOA estimation to the terminal through signaling | → | Step 4: The base station configures, through signaling, a codebook value corresponding to the reference signal to the RIS |

↓

Step 5: The terminal transmits the uplink reference
signal, and the RIS performs reflection using a
corresponding codebook

↓

Step 6: The base station estimates a DOA based
on the RIS codebook, an RIS panel parameter, and
the received uplink reference signal

↓

Step 7: Achieve beam alignment, beam tracking or
positioning

Fig. 10

Step 1: A base station determines a wide beam
between an RIS and a terminal

Step 2: The base station determines a quantity of
RIS codebooks for DOA estimation and
corresponding codebook values based on a
position of the wide beam

Step 3: The base station configures a
downlink reference signal for DOA
estimation to the terminal through signaling

Step 4: The base station configures, through
signaling, a codebook value corresponding to
the reference signal to the RIS

Step 5: The base station transmits the downlink
reference signal, and the RIS performs reflection
using a corresponding codebook

Step 6: The terminal feeds back a measured value
of the downlink reference signal

Step 7: The base station estimates a DOA based
on the RIS codebook, an RIS panel parameter, and
the reference signal fed back by the terminal

Step 8: Achieve beam alignment, beam tracking or
positioning

Fig. 11

First determining
module                    122

Acquisition module        124

Second determining
module                    126

Fig. 12

<table>
<tr><td colspan="2" align="center"><b>INTERNATIONAL SEARCH REPORT</b></td><td colspan="2">International application No.<br><br><b>PCT/CN2023/088739</b></td></tr>
</table>

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, ENTXTC, DWPI, VEN, 3GPP: 智能反射面, 波束, 扫描, 追踪, 参考信号, 码本, 波达角, 反射, 电磁反射, 波达方向, 离开角, 编码, 码字, DOA, direction, arrival, reconfigurable, intelligent, surface, RIS, reflect+, codebook, track, scan, measure+

**C. DOCUMENTS CONSIDERED TO BE RELEVANT**

| Category* | Citation of document, with indication, where appropriate, of the relevant passages | Relevant to claim No. |
|---|---|---|
| Y | CN 111781593 A (SHENZHEN UNIVERSITY) 16 October 2020 (2020-10-16)<br>description, paragraphs 5-33 | 1-18 |
| Y | CN 114024590 A (SOUTHEAST UNIVERSITY) 08 February 2022 (2022-02-08)<br>description, paragraphs 6-27 | 1-18 |
| PX | CN 115842612 A (ZTE CORP.) 24 March 2023 (2023-03-24)<br>entire document | 1-18 |
| A | CN 111050276 A (HUAZHONG UNIVERSITY OF SCIENCE AND TECHNOLOGY) 21 April 2020 (2020-04-21)<br>entire document | 1-18 |
| A | WO 2015109869 A1 (SHENZHEN UNIVERSITY) 30 July 2015 (2015-07-30)<br>entire document | 1-18 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **03 July 2023** | **06 July 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/088739**

| Patent document cited in search report | | | Publication date (day/month/year) | Patent family member(s) | | | Publication date (day/month/year) |
|---|---|---|---|---|---|---|---|
| CN | 111781593 | A | 16 October 2020 | WO | 2022007573 | A1 | 13 January 2022 |
| CN | 114024590 | A | 08 February 2022 | None | | | |
| CN | 115842612 | A | 24 March 2023 | None | | | |
| CN | 111050276 | A | 21 April 2020 | None | | | |
| WO | 2015109869 | A1 | 30 July 2015 | CN | 103760519 | A | 30 April 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210441609